# EUROPEAN PATENT APPLICATION

(11) **EP 4 780 066 A1**
(43) Date of publication of application: **22.07.2026**
(21) Application number: 24870104.7
(22) Date of filing: 05.08.2024
(51) Int. Cl.: H04W 36/00

(54) **HANDOVER METHOD AND APPARATUS**

(30) Priority: 28.09.2023 CN 202311285124
(71) Applicant: HUAWEI TECHNOLOGIES CO., LTD., Shenzhen 518129 (CN)
(72) Inventor: LU, Rui, Shenzhen, Guangdong 518129 (CN); HU, Xingxing, Shenzhen, Guangdong 518129 (CN)
(74) Representative: MERH-IP Matias Erny Reichl Hoffmann Patentanwälte PartG mbB
(86) International application number: PCT/CN2024/109870
(87) International publication number: WO 2025/066555

(57) **Abstract**

Embodiments of this application provide a handover method and an apparatus. The method is performed by a terminal device or a chip used in the terminal device. The method includes: receiving CHO configuration information from a first network device, where the CHO configuration information is used by the terminal device to access a first target cell when a first condition is met; determining, in a first time unit, whether the first condition is met, where the first time unit is any time unit in a communication gap that exists during switching of a network device to which a source cell belongs; and when the first condition is met, accessing the first target cell. In embodiments of this application, it is clarified that the terminal device can evaluate the first condition in the communication gap that exists during switching of the network device to which the source cell belongs. Because the terminal device may need to access the first target cell after switching of the network device to which the source cell belongs, the first condition is evaluated in the communication gap in advance, so that handover efficiency of the terminal device can be improved.

## Description

### CROSS-REFERENCE TO RELATED APPLICATIONS

This application claims priority to Chinese Patent Application No. 202311285124.4, filed with the China National Intellectual Property Administration on September 28, 2023, and entitled "HANDOVER METHOD AND APPARATUS", which is incorporated herein by reference in its entirety.

### TECHNICAL FIELD

This application relates to the field of communication technologies, and in particular, to a handover method and an apparatus.

### BACKGROUND

Non-terrestrial network (non-terrestrial network, NTN) communication is communication implemented via a non-terrestrial network device. An NTN system may include a satellite system and the like. The NTN communication is introduced to mobile network communication, for example, 5th generation (5th generation, 5G) communication, so that user experience can be improved. In one aspect, an NTN can provide a communication service for an area that is difficult to be covered by a terrestrial network, for example, an ocean, a forest, a desert, or a remote region. In another aspect, the NTN can enhance reliability of mobile communication, for example, provide a more stable communication service for users in a high-speed movement scenario, for example, a train or an airplane. In addition, the NTN can further provide more data transmission resources, and support connections of more terminal devices.

In a mobile communication network, due to movement of a terminal device, signal quality of a current serving cell deteriorates, and the terminal device needs to be handed over to a neighboring cell with better signal quality. However, in the NTN system, coverage duration of the non-terrestrial network device in an area on the ground is very short as the non-terrestrial network device moves at a high speed relative to the ground. Consequently, the terminal device frequently changes a serving cell. Therefore, in the NTN system, mobility of the non-terrestrial network device is a main reason why the terminal device performs cell handover.

Because a coverage area of an NTN cell is very large (a coverage radius ranges from dozens of kilometers to hundreds of kilometers), and one cell includes an extremely large quantity of terminal devices, movement of the non-terrestrial network device causes a large quantity of terminal devices to require cell handover simultaneously or frequently. In a cell handover process, a large amount of signaling interaction is generated. Therefore, processing cell handover requests of a large quantity of terminal devices within a short period of time causes processing load on the network, and even causes signaling congestion and increases signaling overheads.

### SUMMARY

Embodiments of this application provide a handover method and an apparatus to improve handover efficiency of a terminal device.

According to a first aspect, an embodiment of this application provides a handover method. The method may be performed by a terminal device, or may be performed by a chip system. The chip system can implement a function of the terminal device. The method includes: receiving conditional handover (conditional handover, CHO) configuration information from a first network device, where the first network device is a network device to which a source cell of the terminal device belongs, and the CHO configuration information is used by the terminal device to access a first target cell when a first condition is met; determining, in a first time unit, whether the first condition is met, where the first time unit is any time unit in a communication gap that exists during switching of the network device to which the source cell belongs; and when the first condition is met, accessing the first target cell.

In this embodiment of this application, it is clarified that when a communication gap exists during switching of the network device to which the source cell belongs, the terminal device may evaluate a CHO execution condition (that is, the first condition) in the communication gap. For example, a satellite of the source cell is switched from a first satellite to a second satellite, and the first satellite and the second satellite do not overlap in terms of service time when providing services for the source cell. A communication gap exists during switching between the first satellite and the second satellite, and the terminal device may evaluate the CHO execution condition in the communication gap. After the switching between the first satellite and the second satellite, the terminal device may move out of a coverage area of the source cell, or coverage areas of the first satellite and the second satellite are inconsistent. Therefore, the terminal device needs to perform CHO (that is, access the first target cell). The CHO execution condition is evaluated in the communication gap in advance, so that handover efficiency of the terminal device can be improved.

In an optional implementation, the first condition includes one or more of the following: a time-based execution condition; a distance-based execution condition; and a signal-quality-based execution condition. In this implementation, because the terminal device cannot obtain signal quality of the source cell in the communication gap that exists during switching of the network device to which the source cell belongs, the signal-quality-based execution condition cannot be evaluated. Therefore, the CHO execution condition may include only the time-based execution condition and/or distance-based execution condition. Therefore, impact of the communication gap on evaluation of the CHO execution condition is reduced, so that the terminal device can evaluate the CHO execution condition in the communication gap.

In an optional implementation, the time-based execution condition includes a time window. For example, the first network device configures, for the terminal device, a time window (T1, T2) for CHO execution (that is, accessing the first target cell), and the terminal device may perform CHO within the time window (T1, T2).

In an optional implementation, the distance-based execution condition includes a distance threshold. For example, the first network device configures, for the terminal device, a distance threshold D1 and a distance threshold D2 for CHO execution (that is, accessing the first target cell). If a distance from the terminal device to the first target cell is less than the distance threshold D1, and a distance from the terminal device to the source cell is greater than the distance threshold D2, the terminal device may perform CHO.

In an optional implementation, the signal-quality-based execution condition includes one or more of an event A3, an event A4, or an event A5. In this implementation, because the terminal device cannot obtain the signal quality of the source cell in the communication gap that exists during switching of the network device to which the source cell belongs, the event A3 or the event A5 cannot be evaluated. Therefore, the signal-quality-based execution condition may include only the event A4. Therefore, impact of the communication gap on evaluation of the signal-quality-based execution condition is reduced, so that the terminal device can evaluate the signal-quality-based execution condition in the communication gap.

In an optional implementation, the method further includes: determining, based on first signal quality of the source cell, whether the event A3 or the event A5 is met, where the first signal quality is signal quality of the source cell before a time at which the first network device stops covering an area in which the terminal device is located or at a time at which the first network device stops covering an area in which the terminal device is located; or determining, based on second signal quality of the source cell, whether the event A3 or the event A5 is met, where the second signal quality is a default value. In this implementation, the terminal device may evaluate the event A3 or the event A5 based on signal quality of the source cell before or when the terminal device is disconnected from the source cell or based on the default value, to reduce impact of the communication gap on evaluation of the event A3 or the event A5, so that the terminal device can evaluate the event A3 or the event A5 in the communication gap.

In an optional implementation, the method further includes: when the first condition is not met, accessing a second target cell, where a dedicated random access resource is configured for the terminal device in the second target cell. In this implementation, if the first condition is not met, the terminal device may choose not to access the first target cell, but choose to access the second target cell in which the dedicated random access resource is configured for the terminal device, thereby improving handover efficiency of the terminal device.

In an optional implementation, the method further includes: receiving physical cell identifier (physical cell identifier, PCI)-unchanged switch indication information from the first network device, where the PCI-unchanged switch indication information indicates the terminal device to access a second network device when a second condition is met; and when the first condition is not met and the second condition is met, accessing the second network device. In this implementation, if the first condition is not met, and PCI-unchanged switch is configured for the terminal device, the terminal device may choose not to access the first target cell, but to access the second network device, that is, choose to perform PCI-unchanged switch, thereby improving handover efficiency of the terminal device.

In an optional implementation, the second condition includes one or more of the following: the time at which the first network device stops covering the area in which the terminal device is located; a time at which PCI-unchanged switch takes effect; a time at which the second network device performs downlink synchronization with the terminal device; or a time at which the second network device starts to cover the area in which the terminal device is located. In this implementation, the terminal device may perform PCI-unchanged switch at the foregoing plurality of times, and a handover manner is relatively flexible.

In an optional implementation, the method further includes: when the communication gap is greater than a first threshold, determining, in the first time unit, whether the first condition is met. In this implementation, because the signal quality of the source cell cannot be obtained in the communication gap that exists during switching of the network device to which the cell of the terminal device belongs, the terminal device may determine, based on a size of the communication gap, whether to evaluate the first condition in the communication gap. If the communication gap is relatively large, the terminal device evaluates the first condition in the communication gap. If the communication gap is relatively small, the terminal device may evaluate the first condition after the communication gap, to reduce impact of the communication gap on the evaluation of the first condition.

According to a second aspect, an embodiment of this application further provides a handover method. The method may be performed by a first network device, or may be performed by a chip system. The chip system can implement a function of the first network device. The method includes: sending CHO configuration information to a terminal device, where the CHO configuration information is used by the terminal device to access a first target cell when a first condition is met, and the first condition includes one or more of the following: a time-based execution condition; a distance-based execution condition; and a signal-quality-based execution condition.

In an optional implementation, the time-based execution condition includes a time window.

In an optional implementation, the distance-based execution condition includes a distance threshold.

In an optional implementation, the signal-quality-based execution condition includes one or more of an event A3, an event A4, or an event A5.

In an optional implementation, the method further includes: determining, based on first signal quality of a source cell of the terminal device, whether the event A3 or the event A5 is met, where the first signal quality is signal quality of the source cell before a time at which the first network device stops covering an area in which the terminal device is located or at a time at which the first network device stops covering an area in which the terminal device is located; or determining, based on second signal quality of a source cell of the terminal device, whether the event A3 or the event A5 is met, where the second signal quality is a default value.

For technical effects brought by the second aspect or some optional implementations, refer to descriptions of technical effects brought by the first aspect or the corresponding implementations.

According to a third aspect, an embodiment of this application further provides a handover method. The method may be performed by a terminal device, or may be performed by a chip system. The chip system can implement a function of the terminal device. The method includes: receiving CHO configuration information and PCI-unchanged switch indication information from a first network device, where the first network device is a network device to which a source cell of the terminal device belongs, the CHO configuration information is used by the terminal device to access a first target cell when a first condition is met, and the PCI-unchanged switch indication information indicates the terminal device to access a second network device when a second condition is met; and accessing the first target cell or accessing the second network device when the first condition and the second condition are met.

In this embodiment of this application, it is clarified that when CHO and PCI-unchanged switch are configured for the terminal device, the terminal device may choose to perform CHO (that is, access the first target cell) or PCI-unchanged switch (that is, access the second network device) when both a CHO execution condition (that is, the first condition) and a PCI-unchanged switch execution condition (that is, the second condition) are met. Therefore, a handover policy of the terminal device is clarified, and handover efficiency of the terminal device is improved.

In an optional implementation, the first condition includes one or more of the following: a time-based execution condition; a distance-based execution condition; and a signal-quality-based execution condition. In this implementation, because the terminal device cannot obtain signal quality of the source cell in a communication gap that exists during switching of the network device to which the source cell belongs, the signal-quality-based execution condition cannot be evaluated. Therefore, the CHO execution condition may include only the time-based execution condition and/or distance-based execution condition. Therefore, impact of the communication gap on evaluation of the CHO execution condition is reduced, so that the terminal device can evaluate the CHO execution condition in the communication gap.

In an optional implementation, the time-based execution condition includes a time window. For example, the first network device configures, for the terminal device, a time window (T1, T2) for CHO execution (that is, accessing the first target cell), and the terminal device may perform CHO within the time window (T1, T2).

In an optional implementation, the distance-based execution condition includes a distance threshold. For example, the first network device configures, for the terminal device, a distance threshold D1 and a distance threshold D2 for CHO execution (that is, accessing the first target cell). If a distance from the terminal device to the first target cell is less than the distance threshold D1, and a distance from the terminal device to the source cell is greater than the distance threshold D2, the terminal device may perform CHO.

In an optional implementation, the signal-quality-based execution condition includes one or more of an event A3, an event A4, or an event A5. In this implementation, because the terminal device cannot obtain the signal quality of the source cell in the communication gap that exists during switching of the network device to which the source cell belongs, the event A3 or the event A5 cannot be evaluated. Therefore, the signal-quality-based execution condition may include only the event A4. Therefore, impact of the communication gap on evaluation of the signal-quality-based execution condition is reduced, so that the terminal device can evaluate the signal-quality-based execution condition in the communication gap.

In an optional implementation, the method further includes: determining, based on first signal quality of the source cell, whether the event A3 or the event A5 is met, where the first signal quality is signal quality of the source cell before a time at which the first network device stops covering an area in which the terminal device is located or at a time at which the first network device stops covering an area in which the terminal device is located; or determining, based on second signal quality of the source cell, whether the event A3 or the event A5 is met, where the second signal quality is a default value. In this implementation, the terminal device may evaluate the event A3 or the event A5 based on signal quality of the source cell before or when the terminal device is disconnected from the source cell or based on the default value, to reduce impact of the communication gap on evaluation of the event A3 or the event A5, so that the terminal device can evaluate the event A3 or the event A5 in the communication gap.

In an optional implementation, the second condition includes one or more of the following: the time at which the first network device stops covering the area in which the terminal device is located; a time at which PCI-unchanged switch takes effect; a time at which the second network device performs downlink synchronization with the terminal device; or a time at which the second network device starts to cover the area in which the terminal device is located. In this implementation, the terminal device may perform PCI-unchanged switch at the foregoing plurality of times, and a handover manner is relatively flexible.

In an optional implementation, the method further includes: when the first condition, the second condition, and a third condition are met, accessing the first target cell, where the third condition includes one or more of the following: a time at which a third network device stops covering the area in which the terminal device is located is later than a time at which the second network device stops covering the area in which the terminal device is located, where the third network device is a network device to which the first target cell belongs; a dedicated random access resource is configured for the terminal device in the first target cell; or a distance between a reference point of the first target cell and the terminal device is less than a distance between a reference point of the source cell and the terminal device.

In this implementation, if both the CHO execution condition (that is, the first condition) and the PCI-unchanged switch execution condition (that is, the second condition) are met, the terminal device chooses to perform CHO (that is, access the first target cell) or PCI-unchanged switch (that is, access the second network device) based on information such as a service stop time of the network device to which the first target cell or the source cell belongs, whether a dedicated random access resource is configured for the terminal device in the first target cell or the source cell, or a distance between the first target cell or the source cell and the terminal device. Therefore, a handover policy of the terminal device is clarified, and handover efficiency of the terminal device is improved.

In an optional implementation, the method further includes: when the first condition, the second condition, and a fourth condition are met, accessing the second network device, where the fourth condition includes one or more of the following: a time at which the second network device stops covering the area in which the terminal device is located is later than a time at which a third network device stops covering the area in which the terminal device is located, where the third network device is a network device to which the first target cell belongs; a dedicated random access resource is configured for the terminal device in the source cell; or a distance between a reference point of the source cell and the terminal device is less than a distance between a reference point of the first target cell and the terminal device.

In this implementation, if both the CHO execution condition (that is, the first condition) and the PCI-unchanged switch execution condition (that is, the second condition) are met, the terminal device chooses to perform CHO (that is, access the first target cell) or PCI-unchanged switch (that is, access the second network device) based on information such as a service stop time of the network device to which the first target cell or the source cell belongs, whether a dedicated random access resource is configured for the terminal device in the first target cell or the source cell, or a distance between the first target cell or the source cell and the terminal device. Therefore, a handover policy of the terminal device is clarified, and handover efficiency of the terminal device is improved.

According to a fourth aspect, an embodiment of this application further provides a handover method. The method may be performed by a first network device, or may be performed by a chip system. The chip system can implement a function of the first network device. The method includes: sending CHO configuration information and PCI-unchanged switch indication information to a terminal device, where the CHO configuration information is used by the terminal device to access a first target cell when a first condition is met, the PCI-unchanged switch indication information indicates the terminal device to access a second network device when a second condition is met, and the first condition includes one or more of the following: a time-based execution condition, a distance-based execution condition, or a signal-quality-based execution condition.

In an optional implementation, the time-based execution condition includes a time window.

In an optional implementation, the distance-based execution condition includes a distance threshold.

In an optional implementation, the signal-quality-based execution condition includes one or more of an event A3, an event A4, or an event A5.

In an optional implementation, the method further includes: determining, based on first signal quality of a source cell of the terminal device, whether the event A3 or the event A5 is met, where the first signal quality is signal quality of the source cell before a time at which the first network device stops covering an area in which the terminal device is located or at a time at which the first network device stops covering an area in which the terminal device is located; or determining, based on second signal quality of a source cell of the terminal device, whether the event A3 or the event A5 is met, where the second signal quality is a default value.

In an optional implementation, the second condition includes one or more of the following: the time at which the first network device stops covering the area in which the terminal device is located; a time at which PCI-unchanged switch takes effect; a time at which the second network device performs downlink synchronization with the terminal device; or a time at which the second network device starts to cover the area in which the terminal device is located.

For technical effects brought by the fourth aspect or some optional implementations, refer to descriptions of technical effects brought by the third aspect or the corresponding implementations.

According to a fifth aspect, an embodiment of this application provides a communication apparatus, including a processor and a memory. The memory is configured to store computer instructions. When the apparatus runs, the processor executes the computer instructions stored in the memory, to enable the apparatus to perform any one of the implementation methods in the first aspect to the fourth aspect. The memory may be a volatile or nonvolatile memory, for example, a cache in a semiconductor chip.

According to a sixth aspect, an embodiment of this application provides a communication apparatus. The apparatus may be a terminal device or a first network device, or may be a chip used for the terminal device or the first network device. The apparatus has a function of implementing any one of the implementation methods in the first aspect to the fourth aspect. The function may be implemented by hardware, or may be implemented by hardware by executing corresponding software. The hardware or software includes one or more modules corresponding to the foregoing function.

According to a seventh aspect, an embodiment of this application provides a communication apparatus, including units or means (means) for performing the steps of any one of the implementation methods in the first aspect to the fourth aspect.

According to an eighth aspect, an embodiment of this application provides a communication apparatus, including a processor and an interface circuit. The processor is configured to communicate with another apparatus through the interface circuit, and perform any one of the implementation methods in the first aspect to the fourth aspect. There may be one or more processors.

According to a ninth aspect, an embodiment of this application provides a communication apparatus, including a processor coupled to a memory. The processor is configured to invoke a program stored in the memory, to perform any one of the implementation methods in the first aspect to the fourth aspect. The memory may be located inside or outside the apparatus. There may also be one or more processors.

According to a tenth aspect, an embodiment of this application further provides a computer-readable storage medium. The computer-readable storage medium stores instructions. When the instructions are run on a communication apparatus, any one of the implementation methods in the first aspect to the fourth aspect is performed.

According to an eleventh aspect, an embodiment of this application further provides a computer program product. The computer program product includes a computer program or instructions. When the computer program or the instructions are run on a communication apparatus, any one of the implementation methods in the first aspect to the fourth aspect is performed.

According to a twelfth aspect, an embodiment of this application further provides a chip system, including a processor configured to perform any one of the implementation methods in the first aspect to the fourth aspect.

### BRIEF DESCRIPTION OF DRAWINGS

FIG. 1 is a diagram of an NTN system according to an embodiment of this application;
FIG. 2 is a diagram of another NTN system according to an embodiment of this application;
FIG. 3 is a diagram of a structure of an access network device according to an embodiment of this application;
FIG. 4 is a schematic flowchart of cell handover according to an embodiment of this application;
FIG. 5 is a schematic flowchart of conditional handover according to an embodiment of this application;
FIG. 6 is a diagram of an earth fixed cell according to an embodiment of this application;
FIG. 7 is a diagram of an earth moving cell according to an embodiment of this application;
FIG. 8 is a diagram of a switch scenario according to an embodiment of this application;
FIG. 9 is a schematic flowchart of a handover method according to an embodiment of this application;
FIG. 10 is a diagram of a structure of a communication apparatus according to an embodiment of this application; and
FIG. 11 is a diagram of a structure of a communication apparatus according to an embodiment of this application.

### DESCRIPTION OF EMBODIMENTS

The following describes in detail embodiments of this application with reference to the accompanying drawings of this specification.

A handover method provided in embodiments of this application may be applied to an NTN system. The NTN system may form a network by using non-terrestrial network devices, for example, an uncrewed aerial vehicle, a high altitude platform station (high altitude platform station, HAPS), and a satellite, to provide services such as data transmission and voice communication for a terminal device. In addition, the NTN system may further include other non-terrestrial network devices. This is not limited in this application.

The NTN system may further support various mobile communication systems, for example, a new radio (new radio, NR) system, a long term evolution (long term evolution, LTE) system, or another communication system such as a future communication system. This is not specifically limited herein.

A satellite is used as an example of the non-terrestrial network device in the NTN system. Satellites may be classified into geostationary earth orbit (geostationary earth orbit, GEO) satellites, medium earth orbit (medium earth orbit, MEO) satellites, and low earth orbit (low earth orbit, LEO) satellites based on satellite altitudes, to be specific, orbital altitudes of satellites. A GEO is a geosynchronous orbit. A satellite running on the orbit is stationary relative to the ground. An orbital altitude of the GEO is generally 35786 kilometers (km). An LEO and an MEO are collectively referred to as non-geostationary orbits (non-geostationary orbit, NGSO). Satellites running on such orbits move at a high speed relative to the ground. An orbital altitude of the LEO generally ranges from 160 km to 2000 km, and an orbital altitude of the MEO generally ranges from 2000 km to 35786 km. For the NGSO, based on whether beams of a satellite move with the satellite, earth moving cells (earth moving cell) and earth fixed cells (earth fixed cell or quasi-earth fixed cell) may be further obtained through classification. For the earth moving cell, the cell moves relative to the ground, and a beam direction of the satellite moves with the satellite. For the earth fixed cell or quasi-earth fixed cell, the cell is fixed relative to the ground within a specific period of time, and an antenna of the satellite may use a beamforming capability of the antenna to fix the beam direction within a specific area of the ground within the specific period of time.

In the NTN system, operating modes of an NTN device may include a transparent (transparent) mode and a regenerative (regenerative) mode. Based on the operating modes of the NTN device, architectures of the NTN system may be classified into the following two types. One is a transparent (transparent) forwarding architecture. In the architecture, the NTN device may be a relay (relay) or an amplifier, and may perform radio frequency filtering, amplification, and the like, to regenerate a physical layer signal. The NTN device may be responsible for layer 1 (layer 1, L1) relay, is configured to perform physical layer forwarding, and is invisible to a higher layer. The other is a regenerative (regenerative) architecture. In the architecture, the NTN device has a processing function of an access network device. For example, in a regenerative operating mode, satellites may be further classified into a regenerative satellite without an inter-satellite link, that is, without an inter-satellite link (inter-satellite link, ISL) between satellites; or a regenerative satellite with an inter-satellite link, that is, with an interface between satellites for direct data exchange, where the inter-satellite link uses an Xn interface; or a regenerative satellite that has a processing function of a distributed unit (distributed unit, DU) of the access network device, where in this scenario, the satellite is used as the DU.

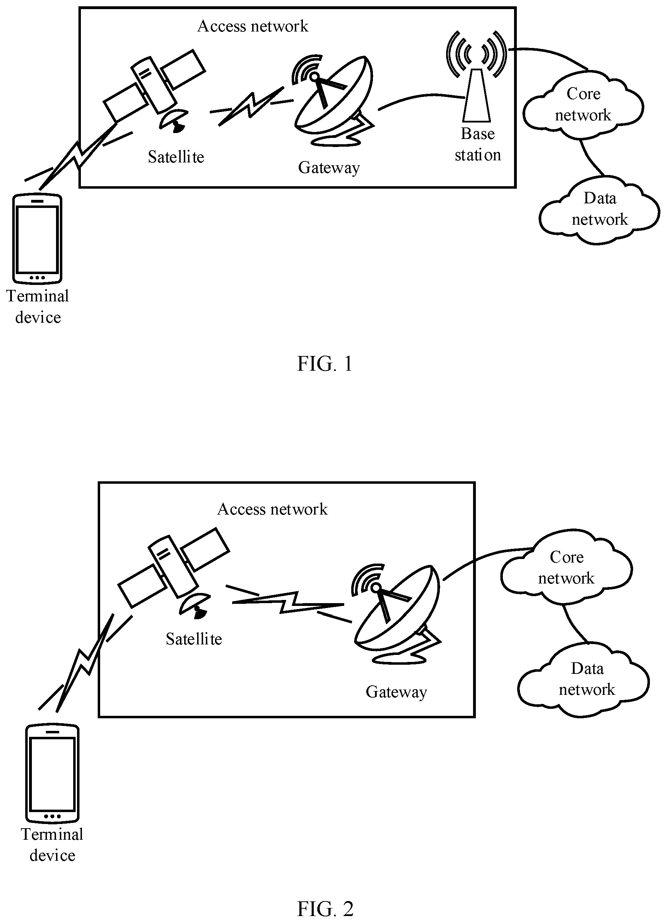

For example, FIG. 1 is a diagram of an NTN system to which an embodiment of this application is applicable. The NTN system may employ a transparent forwarding architecture. In the system shown in FIG. 1, a terminal device may communicate with a 5G core network (core network, CN) through an access network, and may further connect to a data network (data network, DN) through the 5G CN. A satellite and an NTN gateway (gateway) may be used together as a relay device between the terminal device and a base station or as a remote radio unit (remote radio unit, RRU) of a base station.

For example, FIG. 2 is a diagram of another NTN system to which an embodiment of this application is applicable. The NTN system may employ a regenerative architecture. In the system shown in FIG. 2, a satellite may serve as a base station, form an access network with an NTN gateway, and communicate with a 5G CN through the NTN gateway, and may further connect to a DN through the 5G CN. In addition, the satellite may further provide a wireless access service for a terminal device. FIG. 2 shows an example of a regenerative satellite architecture without an inter-satellite link.

It should be noted that FIG. 1 and FIG. 2 show only one satellite and one NTN gateway. In actual use, an architecture with a plurality of satellites and/or a plurality of NTN gateways may be employed based on a requirement. Each satellite may provide a service for one or more terminal devices, each NTN gateway may correspond to one or more satellites, and each satellite may correspond to one or more NTN gateways. This is not specifically limited in embodiments of this application.

It should be noted that FIG. 1 and FIG. 2 are merely examples of the NTN system. The NTN system may further include another specific system. This is not limited in this application.

Devices in embodiments of this application include a terminal device and a network device. For example, the network device includes a terrestrial network (terrestrial network, TN) device (for example, an access network device) and a non-terrestrial network device (for example, a satellite).

The terminal device is also referred to as user equipment (user equipment, UE), a mobile station (mobile station, MS), a mobile terminal (mobile terminal, MT), or the like, and is a device that provides voice and/or data connectivity for a user. For example, the terminal device may be a hand-held device, a vehicle-mounted device, or the like that has a wireless connection function. Currently, some examples of the terminal device may be as follows: a mobile phone (mobile phone), a tablet computer, a notebook computer, a palmtop computer, a mobile Internet device (mobile Internet device, MID), a wearable device, a virtual reality (virtual reality, VR) device, an augmented reality (augmented reality, AR) device, a wireless terminal in industrial control (industrial control), a wireless terminal in self driving (self driving), a wireless terminal in a remote medical surgery (remote medical surgery), a wireless terminal in a smart grid (smart grid), a wireless terminal in transportation safety (transportation safety), a wireless terminal in a smart city (smart city), a wireless terminal in a smart home (smart home), and the like.

The access network device may be a radio access network (radio access network, RAN) node (or device) that connects a terminal device to a wireless network, for example, a base station. Some examples of the RAN node may be as follows: a continuously evolved NodeB (gNB), a transmission reception point (transmission reception point, TRP), an evolved NodeB (evolved NodeB, eNB), a radio network controller (radio network controller, RNC), a NodeB (NodeB, NB), a base station controller (base station controller, BSC), a base transceiver station (base transceiver station, BTS), a home base station (for example, home evolved NodeB, or home NodeB, HNB), a baseband unit (baseband unit, BBU), a wireless fidelity (wireless fidelity, Wi-Fi) access point (access point, AP), and the like.

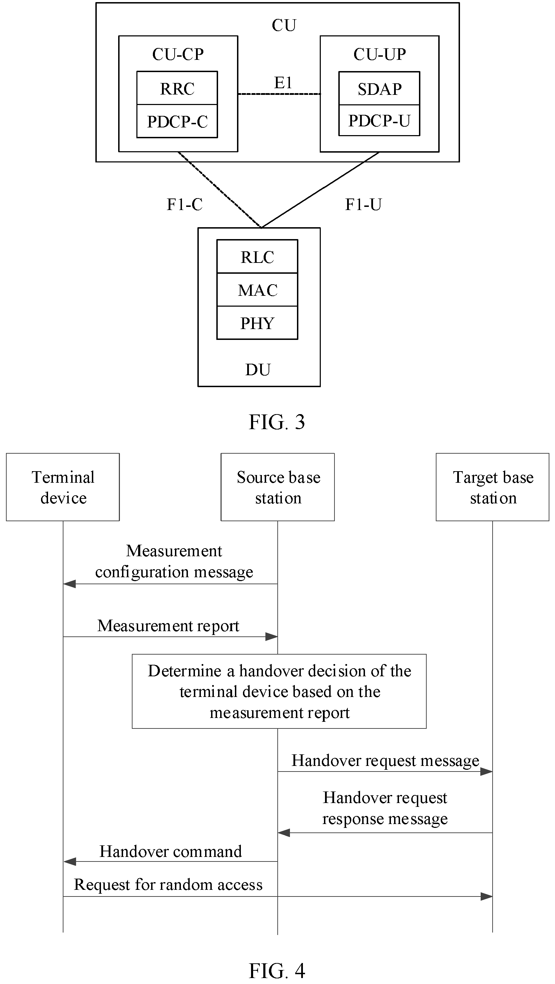

In addition, in a network structure, the access network device may include a central unit (central unit, CU) node or a distributed unit (distributed unit, DU) node, or include a CU node and a DU node. A RAN device that includes a CU node and a DU node splits protocol layers of a gNB in an NR system. Functions of some protocol layers are centrally controlled by a CU, functions of some or all remaining protocol layers are distributed in a DU, and the CU centrally controls the DU, as shown in FIG. 3. Further, the CU may be further divided into a control plane (CU-CP) and a user plane (CU-UP). The CU-CP is responsible for a control plane function, mainly including radio resource control (radio resource control, RRC) and a packet data convergence protocol (packet data convergence protocol, PDCP) corresponding to the control plane (that is, PDCP-C). The PDCP-C is mainly responsible for data encryption and decryption, integrity protection, data transmission, and the like on the control plane. The CU-UP is responsible for a user plane function, mainly including a service data adaptation protocol (service data adaptation protocol, SDAP) and a PDCP corresponding to the user plane (that is, PDCP-U). The SDAP is mainly responsible for processing data of the core network and mapping a flow (flow) to a bearer. The PDCP-U is mainly responsible for encryption and decryption, integrity protection, header compression, sequence number maintenance, data transmission, and the like on a data plane. The CU-CP and the CU-UP are connected through an E1 interface. The CU-CP, on behalf of the gNB, is connected to the core network through an NG interface and connected to the DU through an F1 interface-control plane (that is, F1-C). The CU-UP is connected to the DU through an F1 interface-user plane (that is, F1-U). Certainly, in another possible implementation, the PDCP-C is alternatively in the CU-UP.

It may be understood that, in different systems, the CU (including the CU-CP or the CU-UP) or the DU may alternatively have different names, but a person skilled in the art can understand meanings of the names. For example, in an open radio access network (open radio access network, O-RAN) system, the CU may also be referred to as an O-CU (open CU), the DU may also be referred to as an O-DU, the CU-CP may also be referred to as an O-CU-CP, and the CU-UP may also be referred to as an O-CU-UP. For ease of description, the CU, the CU-CP, the CU-UP, and the DU are used as examples for description in this application.

In embodiments of this application, a communication apparatus configured to implement a function of the network device or a function of the terminal device may be the network device or the terminal device, or may be an apparatus that can support the network device or the terminal device in implementing the function, for example, a chip system, and the apparatus may be installed in the network device or the terminal device. In the technical solutions provided in embodiments of this application, an example in which the apparatus configured to implement the function of the network device is the network device, and the apparatus configured to implement the function of the terminal device is the terminal device is used, to describe the technical solutions provided in embodiments of this application.

In embodiments of this application, unless otherwise specified, a quantity of nouns indicates "a singular noun or a plural noun", that is, "one or more". "At least one" means one or more, and "a plurality of" means two or more. The term "and/or" describes an association relationship between associated objects, and represents that three relationships may exist. For example, A and/or B may represent the following cases: Only A exists, both A and B exist, and only B exists, where A and B may be singular or plural. The character "/" generally indicates an "or" relationship between associated objects. For example, A/B indicates A or B. The term "at least one of the following items (pieces)" or an expression similar to the term indicates any combination of these items, including a single item (piece) or any combination of a plurality of items (pieces).

Ordinal numbers such as "first" and "second" mentioned in embodiments of this application are used to distinguish between a plurality of objects, and are not intended to limit sizes, content, an order, a time sequence, priorities, importance, or the like of the plurality of objects. For example, a first network device and a second network device may be a same network device, or may be different network devices. In addition, this name does not indicate any difference in priorities, importance, or the like between the two network devices.

The foregoing briefly describes the communication systems to which embodiments of this application are applicable. The following describes related technical solutions in embodiments of this application.

### (1) Cell handover

In a TN system, due to movement of a terminal device, signal quality of a current serving cell deteriorates, and the terminal device needs to be handed over to a neighboring cell with better signal quality. It may be understood that because the terminal device moves, the terminal device that is using a network service may move and may be handed over from a cell (a source cell) provided by a base station for the terminal device to another cell (a target cell). To ensure continuity of communication and quality of service, a communication link between the terminal device and the source cell needs to be transferred to the target cell. A process of transferring the communication link between the terminal device and the source cell to the target cell is also referred to as a process of cell handover.

FIG. 4 is a schematic flowchart of cell handover. In FIG. 4, an example in which a source cell is a cell of a source base station and a target cell is a cell of a target base station is used. The cell handover includes the following steps.

Step 1: The source base station sends a measurement configuration (measurement configuration) message to a terminal device, so that the terminal device receives the measurement configuration message.

The measurement configuration message may include a measurement object, a cell list, a reporting manner, and the like. After receiving the measurement configuration message, the terminal device may measure neighboring cells based on the measurement configuration message, to obtain a measurement report (measurement report).

Step 2: The terminal device sends the measurement report to the source base station.

The measurement report may include reference signal received power of a serving cell, signal received power or signal quality of the neighboring cells, or the like, so that the source base station determines, based on the measurement report, whether the terminal device is to perform cell handover.

Step 1 and step 2 are optional.

Step 3: The source base station determines a handover decision (handover decision) of the terminal device based on the measurement report.

The handover decision refers to determining whether the terminal device is to perform cell handover. If determining that the terminal device needs to perform cell handover, the source base station may send a handover request (handover request) message to the target base station.

Optionally, the source base station may also determine the handover decision of the terminal device based on other content.

Step 4: The source base station sends the handover request message to the target base station.

The base station determines, based on the measurement report, that the terminal device needs to perform cell handover, and sends the handover request message to the target base station. The handover request message is used to request the cell handover.

Step 5: The target base station sends a handover request response (handover response) message to the source base station, where the handover response message may include configuration information of the target base station.

The configuration information of the target base station may be used by the terminal device to access the target base station.

Step 6: The source base station sends a handover command to the terminal device.

The handover command indicates the terminal device to perform cell handover. The terminal device receives the handover command in the source cell and parses the handover command to obtain configuration information of the target cell, that is, the terminal device obtains a configuration of the terminal device in the target cell, so that the terminal device may be handed over to the target cell based on the configuration.

Step 7: The terminal device requests random access from the target base station.

### (2) Conditional handover (conditional handover, CHO)

To avoid further deterioration of quality of a communication link between a terminal device and a source base station, which otherwise disrupts normal signaling exchange between the terminal device and the source base station and leads to cell handover failure, the conventional technology provides a CHO mechanism. Specifically, when quality of the communication link between the source base station and the terminal device is relatively good, the source base station sends CHO configuration information to the terminal device. The CHO configuration information includes a CHO execution condition and information about candidate cells (for example, cell global identifiers (cell global identifier, CGI) of the candidate cells or physical cell identifiers (physical cell identifier, PCI) of the candidate cells and frequency information corresponding to the candidate cells). After receiving the configuration information, the terminal device determines, based on the configuration information, whether any candidate cell meets the CHO execution condition, and uses a candidate cell that meets the CHO execution condition as a target cell. Then the terminal device initiates access to the target cell, for example, initiates random access. After the random access succeeds, the terminal device sends an RRC reconfiguration complete (RRCReconfigurationComplete) message to a base station (that is, a target base station) to which the target cell belongs, to notify the target base station that CHO is completed.

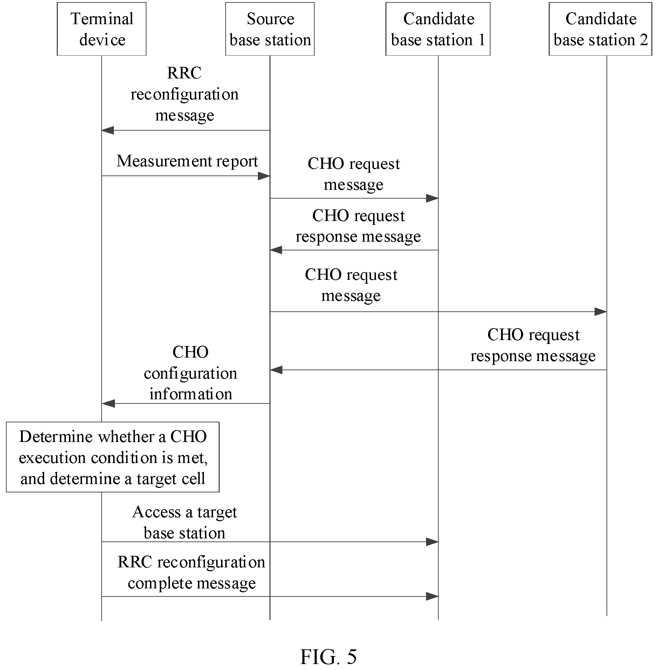

FIG. 5 is a schematic flowchart of conditional handover. In FIG. 5, an example in which a source cell is a cell of a source base station and a target cell is a cell of a target base station is used. The conditional handover includes the following steps.

Step 1: The source base station sends an RRC reconfiguration (RRCReconfiguration) message to a terminal device.

The RRC reconfiguration message may include measurement configuration information. The measurement configuration information may include a measurement object, a cell list, a reporting manner, and the like. After receiving the RRC reconfiguration message, the terminal device may measure neighboring cells based on the measurement configuration information, to obtain a measurement report.

Step 2: The terminal device sends the measurement report to the source base station.

The measurement report may include reference signal received power of a serving cell, signal received power or signal quality of the neighboring cells, or the like, so that the source base station determines, based on the measurement report, whether the terminal device is to perform cell handover.

Step 1 and step 2 are optional.

Step 3: The source base station determines a candidate cell based on the measurement report, and sends a CHO request message to a candidate base station.

Optionally, the source base station may also determine a candidate cell based on other content.

Step 4: The candidate base station sends a CHO request response message to the source base station.

The CHO request response message may include information about the candidate cell.

Step 5: The source base station sends CHO configuration information to the terminal device.

The CHO configuration information may include a CHO execution condition and information about candidate cells.

Step 6: The terminal device determines whether the CHO execution condition is met, and maintains a connection to the source base station. If a candidate cell meets the corresponding CHO execution condition, the candidate cell is determined as a target cell.

Step 7: The terminal device accesses a target base station.

For example, the terminal device requests random access from the target base station.

Step 8: The terminal device sends an RRC reconfiguration complete message to the target base station.

### (3) PCI-unchanged switch (satellite switch without cell PCI change, or satellite switch resynchronization)

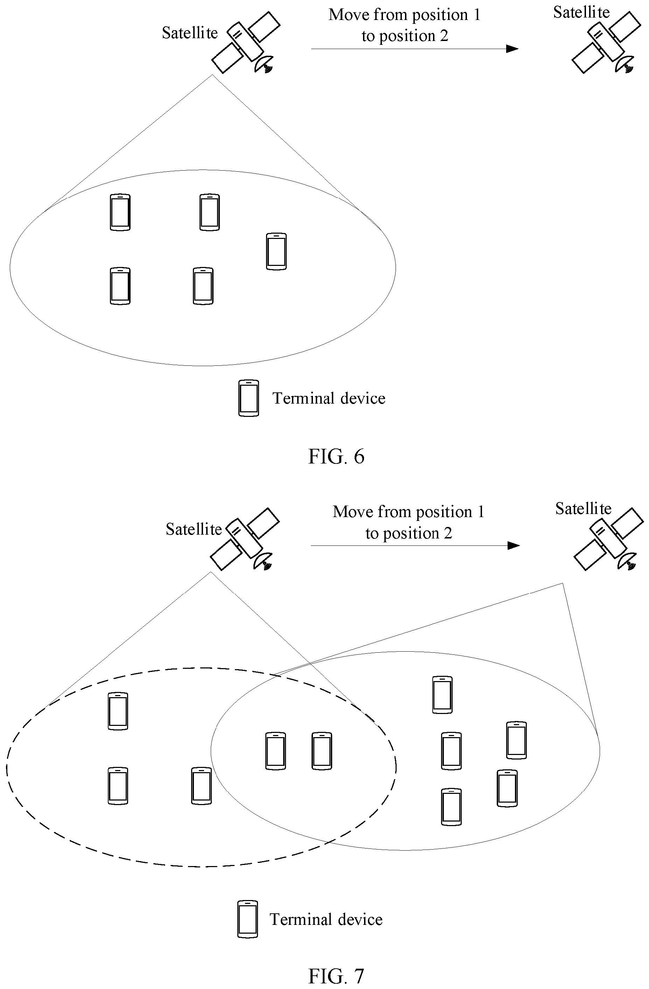

Different from the TN system, in the NTN system, movement of a non-terrestrial network device causes a large quantity of terminal devices to simultaneously require cell handover. For example, as shown in FIG. 6, for the foregoing earth fixed cell, within a specific period of time, a satellite moves from a position 1 to a position 2, and the cell does not move with the satellite. When the satellite moves beyond coverage of the cell (or moves to a position at which the satellite cannot provide coverage for the cell), all terminal devices in the cell need to switch to a next satellite. In this scenario, simultaneous cell handover of a large quantity of terminal devices causes a signaling storm, and causes signaling congestion. As shown in FIG. 7, for the foregoing earth moving cell, the cell moves with a non-terrestrial network device, and during movement of the non-terrestrial network device, terminal devices are continuously handed over to or from the cell. For example, a dashed-line cell represents a cell position when a satellite is located at a position 1, a solid-line cell represents a cell position when the satellite is located at a position 2, and the two cell positions partially overlap. Terminal devices outside an overlapping area and in the dashed-line cell need to be handed over. Therefore, in this scenario, frequent cell handover of a large quantity of terminal devices also causes high signaling overheads.

For the earth fixed cell, the base station remains unchanged before and after satellite switching, and the satellite performs only a signal amplification function. Therefore, the PCI and frequency of the cell do not need to be changed before and after satellite switching. For example, a frequency of a synchronization signal and physical broadcast channel block (synchronization signal and physical broadcast channel block, SSB) corresponding to the cell does not need to be changed, and layer 3 (Layer 3, L3) signaling, which is used to notify the terminal device to perform handover, is not required. The terminal device only needs to perform downlink synchronization and uplink synchronization with a new satellite after the new satellite arrives. For example, the terminal device may complete uplink synchronization with the new satellite through random access, or may complete uplink synchronization with the new satellite in a random access channel less (random access channel less, RACH less) manner. In other words, before and after satellite switching, a configuration of the terminal device in the cell remains unchanged. Because there is no need to introduce the L3 signaling for handover, the foregoing signaling congestion problem is resolved.

Currently, satellite switching includes two switch modes: hard switch (hard switch), which means that a coverage time of the new satellite does not overlap a coverage time of the old satellite; and soft switch (soft switch), which means that the coverage time of the new satellite overlaps the coverage time of the old satellite. In a hard switch scenario, the PCI of the cell may not be changed before and after satellite switching. Therefore, there is no need to deliver a handover command. In a soft switch scenario, signal interference may exist because the coverage time of the new satellite overlaps the coverage time of the old satellite. Two solutions are provided. One solution is to use a same approach as in the hard switch scenario, where a RAN 1 resolves the signal interference. The other solution is to change the PCI of the cell before and after satellite switching, but keep the configuration of the terminal device unchanged or slightly changed (for example, modify a configuration strongly related to the PCI of the cell, or only change the PCI of the cell). The terminal device then searches for a changed PCI of the cell and performs downlink or uplink synchronization, and there is no need to deliver a handover command. For ease of understanding, the foregoing handover in which the PCI changes or remains unchanged but no handover command needs to be delivered may be collectively referred to as handover without L3 signaling.

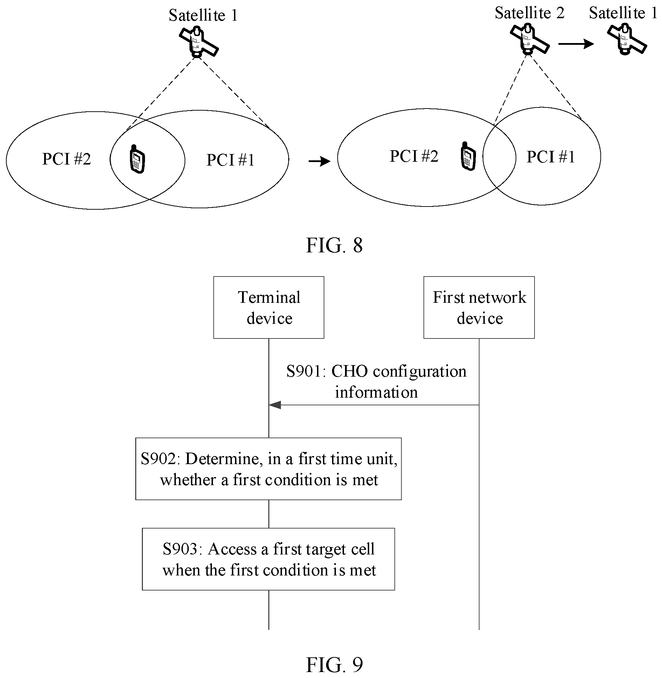

However, FIG. 8 is a diagram of a switch scenario. In this scenario, a current serving cell of a terminal device is a cell corresponding to a PCI #1, and a satellite that covers the cell corresponding to the PCI #1 is switched from a satellite 1 to a satellite 2. When a handover policy for PCI-unchanged switch (also referred to as handover without L3 signaling) is configured for the terminal device, due to mobility of the terminal device, the terminal device at a coverage edge of the cell corresponding to the PCI #1 may move out of a coverage area of the cell corresponding to the PCI #1, or because coverage areas of the satellite 1 and the satellite 2 are inconsistent, and the coverage area of the satellite 2 is smaller than the coverage area of the satellite 1, the terminal device at a coverage edge of the cell corresponding to the PCI #1 may not be within the coverage area of the satellite 2. Therefore, after the handover policy with the satellite changed but PCI unchanged is used, the terminal device at a coverage edge of the cell corresponding to the PCI #1 still needs to be handed over to a neighboring cell. In a scenario in which a terminal device at a cell coverage edge still needs to be handed over to a neighboring cell due to movement of the terminal device or inconsistency between coverage areas of old and new satellites, a network side may configure CHO for the terminal device at the cell coverage edge. For example, when signal quality of the cell corresponding to the PCI #1 deteriorates, the terminal device may be handed over, based on the CHO, to a cell corresponding to a PCI #2, thereby improving robustness of handover.

However, in the hard switch scenario, the new satellite and the old satellite of the cell corresponding to the PCI #1 have a coverage timeslot (GAP). Because the terminal device has been disconnected from the current serving cell during the gap, the terminal device may be unable to evaluate a CHO execution condition. In addition, if both the PCI-unchanged switch and the CHO meet a corresponding execution condition, the terminal device does not know whether to perform the CHO or the PCI-unchanged switch.

Based on this, an embodiment of this application provides a handover method to improve handover efficiency of a terminal device.

The method may be applied to an inter-satellite (or inter-base station) switch scenario. In an inter-satellite switch scenario, an example in which the terminal device switches from a first network device to a second network device is used. The first network device may be a first satellite, and the second network device may be a second satellite. For the system in FIG. 1, the first satellite and the second satellite may be satellites connected to base stations. The base station connected to the first satellite and the base station connected to the second satellite may be a same base station, that is, the base station connected to the first satellite and the second satellite is a source base station. Alternatively, the base station connected to the first satellite and the base station connected to the second satellite may be different base stations, that is, the base station connected to the first satellite is a source base station, and the base station connected to the second satellite is a target base station. For the NTN system in FIG. 2, the first satellite and the second satellite may be satellites having base station functions. In other words, the first satellite is a source base station, and the second satellite is a target base station.

In an inter-base station switch scenario, an example in which the terminal device switches from a first network device to a third network device is used. The first network device is a source base station, and the third network device is a target base station. For the system in FIG. 1, the first network device and the third network device may be base stations connected to satellites. For the NTN system in FIG. 2, the first network device and the third network device may be satellites having base station functions.

For ease of description, the following uses an example in which the first network device is the source base station or the first satellite connected to the source base station, the second network device is the second satellite connected to the source base station, and the third network device is the target base station.

FIG. 9 is a schematic flowchart of a handover method according to an embodiment of this application. In the following description, an example in which the method is performed by a first network device (or a chip used in the first network device) and a terminal device (or a chip used in the terminal device) is used. The method includes the following steps.

S901: The first network device sends CHO configuration information to the terminal device. Correspondingly, the terminal device receives the CHO configuration information from the first network device.

The first network device may be a network device to which a source cell of the terminal device belongs. For example, the first network device may be a source base station or a first satellite connected to a source base station. Optionally, the terminal device may be located at a coverage edge of the source cell.

The CHO configuration information may be used by the terminal device to access a first target cell when a first condition is met. Specifically, the CHO configuration information may include the first condition (also referred to as a CHO execution condition) and information about the first target cell. The information about the first target cell includes configuration information required for accessing the first target cell, for example, a CGI of the first target cell or a PCI of the first target cell and frequency information corresponding to the first target cell. Optionally, the first condition may be generated by the first network device, and the information about the first target cell may be generated by a network device corresponding to the first target cell and sent to the first network device.

In a possible implementation, the first condition may include but is not limited to one or more of the following: a time-based execution condition; a distance-based execution condition; and a signal-quality-based execution condition. For example, the first condition may include only the time-based execution condition. Alternatively, the first condition may include only the distance-based execution condition. Alternatively, the first condition may include only the signal-quality-based execution condition. Alternatively, the first condition may include the time-based execution condition and the signal-quality-based execution condition. Alternatively, the first condition may include the distance-based execution condition and the signal-quality-based execution condition. Alternatively, the first condition may include the distance-based execution condition and the time-based execution condition.

The time-based execution condition may include a time window. For example, the first network device configures, for the terminal device, a time window (T1, T2) for CHO execution (that is, accessing the first target cell). If a current time is within the time window (T1, T2), the terminal device may determine that the time-based execution condition is met, so that the terminal device can perform CHO within the time window (T1, T2).

The distance-based execution condition may include a distance threshold. For example, the first network device configures, for the terminal device, a distance threshold D1 and a distance threshold D2 for CHO execution (that is, accessing the first target cell). If a distance from the terminal device to the first target cell is less than the distance threshold D1, and a distance from the terminal device to the source cell is greater than the distance threshold D2, the terminal device may determine that the distance-based execution condition is met, so that the terminal device can perform CHO. Optionally, the distance from the terminal device to the cell may be a distance to a cell reference point, and the cell reference point may be understood as a reference point whose position relative to the network device corresponding to the cell remains unchanged. For example, the position of the cell reference point may be a central position of the cell.

The signal-quality-based execution condition may include one or more of an event A1 (event A1), an event A2 (event A2), an event A3 (event A3), an event A4 (event A4), or an event A5 (event A5). For example, the signal-quality-based execution condition may include only the event A1. Alternatively, the signal-quality-based execution condition may include only the event A2. Alternatively, the signal-quality-based execution condition may include only the event A3. Alternatively, the signal-quality-based execution condition may include only the event A4. Alternatively, the signal-quality-based execution condition may include only the event A5. Alternatively, the signal-quality-based execution condition may include the event A3, the event A4, and the event A5. Alternatively, the signal-quality-based execution condition may include the event A3 and the event A5. Alternatively, the signal-quality-based execution condition may include the event A4 and the event A5. Alternatively, the signal-quality-based execution condition may include the event A3 and the event A4. When the signal-quality-based execution condition includes the foregoing events, if the terminal device determines that the events are met, the terminal device may determine that the signal-quality-based execution condition is met.

The event A1 means that signal quality of the source cell is higher than a first absolute threshold. The event A2 means that signal quality of the source cell is lower than a second absolute threshold. The event A3 means that signal quality of the first target cell is higher than signal quality of the source cell by an offset value. The event A4 means that signal quality of the first target cell is higher than a third absolute threshold. The event A5 means that signal quality of the source cell is lower than a fourth absolute threshold and that signal quality of the first target cell is higher than a fifth absolute threshold. Signal quality of the first target cell or the source cell may be reference signal received power (reference signal received power, RSRP) of the first target cell or the source cell, reference signal received quality (reference signal received quality, RSRQ) of the first target cell or the source cell, or a value determined based on RSRP of the first target cell or the source cell and RSRQ of the first target cell or the source cell. Optionally, the signal-quality-based execution condition may further include another event. This is not specifically limited in this application.

Optionally, before the first network device sends the CHO configuration information to the terminal device, the first network device and the terminal device may further perform the following steps:
Step A1: The first network device sends measurement configuration information to the terminal device, and correspondingly, the terminal device receives the measurement configuration information from the first network device. The measurement configuration information may include one or more of the following: a measurement object, a report configuration, a measurement identifier (identity document, ID), a measurement quantity configuration, or a measurement gap configuration.
Step A2: The terminal device sends a measurement report to the first network device, and correspondingly, the first network device receives the measurement report from the terminal device.
Step A3: The network device selects at least one candidate cell (for example, the first target cell) for the UE based on the measurement report, and sends a CHO request message to a network device (for example, a third network device) to which the at least one candidate cell belongs. The first target cell may be a candidate cell in the at least one candidate cell, and the third network device may be a network device to which the first target cell belongs. For example, the third network device may be a target base station.
Step A4: The third network device sends a CHO request response message to the first network device. The CHO request response message may include information about the first target cell.

Optionally, the first network device and the terminal device may further perform the following step: The first network device sends PCI-unchanged switch indication information to the terminal device, and correspondingly, the terminal device receives the PCI-unchanged switch indication information from the first network device.

The PCI-unchanged switch indication information may be carried in system information. The PCI-unchanged switch indication information indicates the terminal device to switch to or access a second network device when a second condition is met. The second network device may be a network device to which the source cell belongs. For example, the first network device may be a second satellite connected to the source base station. The second condition may include one or more of the following: a time at which the first network device stops covering an area in which the terminal device is located; a time at which PCI-unchanged switch takes effect; a time at which the second network device performs downlink synchronization with the terminal device; or a time at which the second network device starts to cover an area in which the terminal device is located. The time at which the first network device stops covering the area in which the terminal device is located is a service stop time (for example, t-service-) of the first network device. That the first network device stops a service means that the first network device stops or suspends a service of the terminal device in a corresponding cell, or that the first network device stops a service means that the first network device stops covering a location of the terminal device or a cell in which the terminal device is located. Alternatively, the time at which the first network device stops covering the area in which the terminal device is located is a time at which the source cell stops providing a service for a current service area.

Specifically, the PCI-unchanged switch indication information may be a Boolean value, that is, "true" or "false" indicates the terminal device to perform PCI-unchanged switch. Alternatively, the PCI-unchanged switch indication information may be cell information, for example, a PCI of a cell. The cell information implicitly indicates the terminal device to perform PCI-unchanged switch and to perform handover to a cell corresponding to the PCI carried in the system information. Alternatively, the PCI-unchanged switch indication information may be a time parameter t-service, and the time parameter t-service implicitly indicates the terminal device to perform PCI-unchanged switch. The time parameter t-service may be the time at which the first network device stops covering the area in which the terminal device is located, that is, the service stop time (for example, t-service1) of the first network device. Alternatively, the PCI-unchanged switch indication information may be a time parameter t-start, and the time parameter t-start implicitly indicates the terminal device to perform PCI-unchanged switch. The time parameter t-start may be the time at which the second network device starts to cover the area in which the terminal device is located (or referred to as a time at which the second network device starts to provide a service for the area covered by the source cell), or may be the time at which the PCI-unchanged switch takes effect, or may be the time at which the second network device performs downlink synchronization with the terminal device.

S902: The terminal device determines, in a first time unit, whether the first condition is met.

The first time unit is any time unit in a communication gap that exists during switching of the network device to which the source cell belongs.

For example, the network device to which the source cell belongs may be switched from the first network device to the second network device. The first network device may be the first satellite connected to the source base station, and the second network device may be the second satellite connected to the source base station. In other words, the satellite of the source cell may be switched from the first satellite to the second satellite. If the first satellite and the second satellite provide services for the source cell, and the first satellite and the second satellite do not overlap in terms of service time, a communication gap (for example, a gap exists between t-service and t-start) exists during switching of the satellite of the source cell. In this case, because the base station of the source cell remains unchanged before and after switching of the satellite of the source cell, the terminal device may still be in an RRC_CONNECTED (RRC_CONNECTED) state in the communication gap. After receiving the CHO configuration information from the first network device, the terminal device may determine, in any time unit in the communication gap, whether the first condition is met.

Because the terminal device has been disconnected from the source cell or has been disconnected from the first satellite in the communication gap, the terminal device cannot obtain signal quality of the source cell. As a result, when the first condition includes the event A3 or the event A5, the terminal device cannot evaluate the first condition in the communication gap. Therefore, the terminal device may evaluate the event A3 or the event A5 by using signal quality of the source cell that is obtained before the terminal device is disconnected from the source cell or the first satellite or by using a default value.

Specifically, the terminal device may determine, based on first signal quality of the source cell, whether the event A3 or the event A5 is met. It may be understood that the terminal device determines that the signal quality of the source cell is the first signal quality.

The first signal quality is signal quality of the source cell that is obtained by the terminal device before the time at which the first network device stops covering the area in which the terminal device is located or at the time at which the first network device stops covering the area in which the terminal device is located. The time at which the first network device stops covering the area in which the terminal device is located refers to expiry or arrival of the service stop time (for example, t-service1) of the first network device. That the first network device stops the service means that the first network device stops or suspends the service of the terminal device in the corresponding cell, or that the first network device stops the service means that the first network device stops covering the location of the terminal device or the cell in which the terminal device is located.

Alternatively, the terminal device may determine, based on second signal quality of the source cell, whether the event A3 or the event A5 is met. The second signal quality is a default value. For example, the second signal quality may be -100 decibel-milliwatts (dBm). The default value may be configured by the network device, or may be prescribed in a protocol. This is not specifically limited in this embodiment of this application.

Alternatively, when the first condition includes one of the event A3 or the event A5, and includes at least one of the time-based execution condition, the distance-based execution condition, and the event A4, the terminal device may only determine whether at least one of the time-based execution condition, the distance-based execution condition, and the A4 event in the first condition is met (it may be understood that the terminal device may ignore the event A3 or the event A5). If at least one of the time-based execution condition, the distance-based execution condition, and the event A4 in the first condition is met, the terminal device may consider that the first condition is met; otherwise, the terminal device considers that the first condition is not met.

Alternatively, when the first condition includes one of the event A3 and the event A5, the terminal device may determine, based on whether the signal quality of the first target cell exceeds a threshold #1, whether to access the first target cell. The threshold #1 may be a default value, or may be sent by the first network device to the terminal device. If the signal quality of the first target cell exceeds the threshold #1, the execution condition of the first target cell is met or the terminal device accesses the first target cell; otherwise, the execution condition of the first target cell is not met or the terminal device does not access the first target cell. Further, if the first condition further includes the time-based execution condition and/or the distance-based execution condition, the terminal device considers that the execution condition of the first target cell is met or the terminal device accesses the first target cell only when the terminal device meets the time-based execution condition and/or the distance-based execution condition.

Alternatively, when the first condition includes one of the event A3 and the event A5, the terminal device may determine, based on whether the terminal device has uplink or downlink data that needs to be transmitted, whether to access the first target cell. If the terminal device has uplink or downlink data that needs to be transmitted (or an amount of uplink or downlink data that needs to be transmitted exceeds a threshold #2), the execution condition of the first target cell is met or the terminal device accesses the first target cell; otherwise, the execution condition of the first target cell is not met or the terminal device does not access the first target cell. Further, if the first condition further includes the time-based execution condition and/or the distance-based execution condition, the terminal device considers that the execution condition of the first target cell is met or the terminal device accesses the first target cell only when the terminal device meets the time-based execution condition and/or the distance-based execution condition.

In a possible implementation, the terminal device may determine, based on the communication gap that exists during switching of the network device to which the source cell belongs, whether the first condition is met in the first time unit. Specifically, the terminal device may determine whether the communication gap existing during switching of the network device to which the source cell belongs is greater than a first threshold. If the communication gap is greater than the first threshold, the terminal device may determine that the first condition is met in the first time unit; otherwise, the terminal device determines that the first condition is not met in the first time unit. The first threshold may be configured by the network device, or may be prescribed in a protocol, or may be determined by the terminal device. This is not specifically limited in this embodiment of this application.

In a possible implementation, the terminal device may determine, based on the communication gap that exists during switching of the network device to which the source cell belongs, whether the first condition is met in the first time unit. Specifically, when the communication gap that exists during switching of the network device to which the source cell belongs is greater than the first threshold, the terminal device may determine, by using the rule of determining, by the terminal device based on the first signal quality of the source cell, whether the event A3 or the event A5 is met, whether the first condition is met in the first time unit.

In a possible implementation, after receiving the CHO configuration information from the first network device, the terminal device may not determine, in the first time unit, whether the first condition is met. In this case, if the terminal device has received the PCI-unchanged switch indication information from the first network device, the terminal device may keep a configuration of the terminal device in the source cell, and access the second network device when the second network device starts to cover the location of the terminal device or the cell in which the terminal device is located, that is, the terminal device may perform PCI-unchanged switch.

When the terminal device does not determine, in the first time unit, whether the first condition is met, the first network device and the terminal device may reserve the CHO configuration in the communication gap. The terminal device may determine, in a second time unit, whether the first condition is met. Optionally, the terminal device may access the first target cell when the first condition is met. The second time unit is any time unit after the communication gap that exists during switching of the network device to which the source cell belongs.

Alternatively, the first network device and the terminal device may reserve the CHO configuration in the communication gap. If the terminal device has received the PCI-unchanged switch indication information from the first network device, the terminal device may access the first target cell based on the information about the first target cell in the CHO configuration information when performing RRC reestablishment due to PCI-unchanged switch failure.

Alternatively, the first network device and the terminal device may not reserve the CHO configuration in the communication gap. The first network device may indicate, in the communication gap, the third network device to release a resource reserved by the first target cell for the terminal device. Alternatively, if the first condition includes the time window (T1, T2), the third network device may release, after T2, the resource reserved by the first target cell for the terminal device.

S903: The terminal device accesses the first target cell when the first condition is met.

Specifically, when the first condition is met, the terminal device accesses the first target cell, that is, the terminal device is handed over from the source cell to the first target cell. Optionally, after the handover is completed, the third network device may send a handover success message to the first network device, and the first network device indicates a network device to which another candidate cell different from the first target cell belongs to release a resource reserved by the another candidate cell for the terminal device. If the first condition includes the time window (T1, T2), the network device to which the another candidate cell belongs may release, after T2, the resource reserved by the another candidate cell for the terminal device.

In a possible implementation, if the terminal device also meets a first condition corresponding to another candidate cell different from the first target cell, the terminal device may select, from the first target cell and the another candidate cell, a cell in which a dedicated random access resource is configured for the terminal device, for access. For example, if a contention-free random access (contention-free random access, CFRA) resource is configured for the terminal device in the first target cell, or the terminal device is configured to access the first target cell in a RACH-less manner, the terminal device may select, from the first target cell and the another candidate cell, the first target cell for access. Optionally, in the another candidate cell, no terminal device is configured with a CFRA resource, or no terminal device is configured to access the first target cell in the RACH-less manner. Alternatively, the terminal device may select, from the first target cell and the another candidate cell, a cell whose network device has a later service stop time, for access. For example, a service stop time (for example, t-service3) of the third network device is later. In this case, the terminal device may select, from the first target cell and the another candidate cell, the first target cell for access.

In a possible implementation, the terminal device may further access a second target cell when the first condition is not met. A dedicated random access resource is configured for the terminal device in the second target cell. For example, a CFRA resource is configured for the terminal device in the second target cell, or the terminal device is configured to access the second target cell in the RACH-less manner.

In a possible implementation, the terminal device accesses the second network device when the first condition is not met but the second condition is met. For example, the terminal device currently accesses, by using the configuration of the cell corresponding to the PCI #1, the cell corresponding to the PCI #1, that is, the source cell is the cell corresponding to the PCI #1. In this case, the first satellite provides a service for the source cell. As the satellite moves, the satellite that covers the cell corresponding to the PCI #1 is switched from the first satellite to the second satellite. If the handover policy for PCI-unchanged switch is configured for the terminal device, the terminal device may maintain the configuration of the cell corresponding to the PCI #1, and access the second satellite after the second satellite covers the cell. In this case, the second satellite provides a service for the source cell.

In a possible implementation, the terminal device accesses the first target cell or the second network device when the first condition and the second condition are met.

Specifically, the terminal device may access the first target cell when the first condition, the second condition, and a third condition are met. Optionally, the first condition may be an execution condition including the event A4 or A5, or may be an execution condition not including the event A4 or A5. The third condition includes one or more of the following:
A time at which the third network device (or referred to as a CHO target network device) stops covering the area in which the terminal device is located is later than a time at which the second network device (or referred to as a PCI-unchanged switch target network device) stops covering the area in which the terminal device is located. The time at which the third network device stops covering the area in which the terminal device is located is the service stop time (for example, t-service3) of the third network device (or referred to as a time at which the first target cell provides a service for a coverage area of the first target cell by using the third network device). That the third network device stops the service means that the third network device stops or suspends the service of the terminal device in the corresponding cell, or that the third network device stops covering the location of the terminal device or the cell in which the terminal device is located. The time at which the second network device stops covering the area in which the terminal device is located is a service stop time (for example, t-service2) of the second network device (or referred to as a time at which the source cell provides a service for a coverage area of the source cell by using the second network device). That the second network device stops the service means that the second network device stops or suspends the service of the terminal device in the corresponding cell, or that the first network device stops covering the location of the terminal device or the cell in which the terminal device is located. In other words, t-service3 is later than t-service2.

A dedicated random access resource is configured for the terminal device in the first target cell. For example, a CFRA resource or a RACH-less resource is configured for the terminal device in the first target cell, or no CFRA resource or RACH-less resource is configured for the terminal device in the source cell.

Alternatively, a distance (for example, D1) between a reference point of the first target cell and the terminal device is less than a distance (for example, D2) between a reference point of the source cell and the terminal device. In other words, D1 is less than D2.

Alternatively, the terminal device may access the second network device when the first condition, the second condition, and a fourth condition are met. The fourth condition includes one or more of the following:
A time at which the second network device stops covering the area in which the terminal device is located is later than a time at which the third network device stops covering the area in which the terminal device is located. In other words, t-service3 is later than t-service2.

A dedicated random access resource is configured for the terminal device in the source cell. For example, a CFRA resource or a RACH-less resource is configured for the terminal device in the source cell, or no CFRA resource or RACH-less resource is configured for the terminal device in the first target cell.

Alternatively, a distance (for example, D2) between a reference point of the source cell and the terminal device is less than a distance (for example, D1) between a reference point of the first target cell and the terminal device. In other words, D2 is less than D1.

In the foregoing solution, it is clarified that when a communication gap exists during switching of the network device to which the source cell belongs, the terminal device may evaluate the CHO execution condition (that is, the first condition) in the communication gap. For example, the satellite of the source cell is switched from the first satellite to the second satellite, and the first satellite and the second satellite do not overlap in terms of service time when providing services for the source cell. A communication gap exists during switching between the first satellite and the second satellite, and the terminal device may evaluate the CHO execution condition in the communication gap. After the switching between the first satellite and the second satellite, the terminal device may move out of the coverage area of the source cell, or coverage areas of the first satellite and the second satellite are inconsistent. Therefore, the terminal device needs to perform CHO (that is, access the first target cell). The CHO execution condition is evaluated in the communication gap in advance, so that handover efficiency of the terminal device can be improved. In addition, it is clarified that when CHO and PCI-unchanged switch are configured for the terminal device, the terminal device may choose to perform CHO (that is, access the first target cell) or PCI-unchanged switch (that is, access the second network device) when both the CHO execution condition (that is, the first condition) and the PCI-unchanged switch execution condition (that is, the second condition) are met. Therefore, a handover policy of the terminal device is clarified, and handover efficiency of the terminal device is improved.

In embodiments of this application, the first network device or the terminal device may perform some or all of the steps in embodiments of this application. These steps or operations are merely examples. In embodiments of this application, other operations or variations of various operations may be further performed. In addition, the steps may be performed in an order different from the order presented in embodiments of this application, and not all the operations in embodiments of this application may be performed.

To implement the functions in the foregoing embodiments, the first network device or the terminal device includes a corresponding hardware structure and/or software module for performing each function. A person skilled in the art should be easily aware that, in this application, the units and method steps in the examples described with reference to embodiments disclosed in this application can be implemented by hardware or a combination of hardware and computer software. Whether a function is performed by hardware or hardware driven by computer software depends on particular application scenarios and design constraints of the technical solutions.

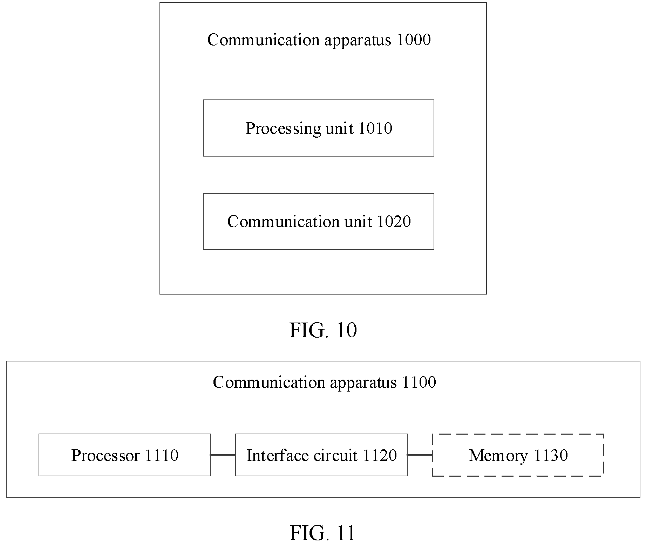

FIG. 10 and FIG. 11 are diagrams of possible structures of communication apparatuses according to embodiments of this application. These communication apparatuses may be configured to implement the functions of the first network device or the terminal device in the foregoing method embodiment, and therefore can also achieve beneficial effects of the foregoing method embodiment. In embodiments of this application, the communication apparatus may be the first network device or the terminal device, or may be a module (for example, a chip) used in the first network device or the terminal device.

A communication apparatus 1000 shown in FIG. 10 includes a processing unit 1010 and a communication unit 1020. The communication apparatus 1000 is configured to implement functions of the first network device or the terminal device in the foregoing method embodiment.

When the communication apparatus 1000 is configured to implement functions of the terminal device in the foregoing embodiment:
the communication unit is configured to receive conditional handover CHO configuration information from a first network device, where the first network device is a network device to which a source cell of the terminal device belongs, and the CHO configuration information is used by the terminal device to access a first target cell when a first condition is met;
the processing unit is configured to determine, in a first time unit, whether the first condition is met, where the first time unit is any time unit in a communication gap that exists during switching of the network device to which the source cell belongs; and
the processing unit is configured to access the first target cell when the first condition is met.

When the communication apparatus 1000 is configured to implement functions of the first network device in the foregoing embodiment:
the communication unit is configured to send CHO configuration information to a terminal device, where the CHO configuration information is used by the terminal device to access a first target cell when a first condition is met, and the first condition includes one or more of the following: a time-based execution condition; a distance-based execution condition; and a signal-quality-based execution condition.

When the communication apparatus 1000 is configured to implement functions of the terminal device in the foregoing embodiment:
the communication unit is configured to receive CHO configuration information and PCI-unchanged switch indication information from a first network device, where the first network device is a network device to which a source cell of the terminal device belongs, the CHO configuration information is used by the terminal device to access a first target cell when a first condition is met, and the PCI-unchanged switch indication information indicates the terminal device to access a second network device when a second condition is met; and
the processing unit is configured to access the first target cell or access the second network device when the first condition and the second condition are met.

When the communication apparatus 1000 is configured to implement functions of the first network device in the foregoing embodiment:
the communication unit is configured to send CHO configuration information and PCI-unchanged switch indication information to a terminal device, where the CHO configuration information is used by the terminal device to access a first target cell when a first condition is met, the PCI-unchanged switch indication information indicates the terminal device to access a second network device when a second condition is met, and the first condition includes one or more of the following: a time-based execution condition, a distance-based execution condition, or a signal-quality-based execution condition.

For more detailed descriptions about the processing unit 1010 and the communication unit 1020, directly refer to related descriptions in the foregoing method embodiment. Details are not described herein.

A communication apparatus 1100 shown in FIG. 11 includes a processor 1110 and an interface circuit 1120. The processor 1110 and the interface circuit 1120 are coupled to each other. The interface circuit 1120 may be a transceiver or an input/output interface. For example, the communication apparatus 1100 may further include a memory 1130, configured to store instructions executed by the processor 1110, or store input data required for running instructions by the processor 1110, or store data generated after the processor 1110 runs instructions.

When the communication apparatus 1100 is configured to implement the foregoing method embodiment, the processor 1110 is configured to implement a function of the processing unit 1010, and the interface circuit 1120 is configured to implement a function of the communication unit 1020.

When the communication apparatus is a chip used in a terminal device, the chip in the terminal device implements functions of the terminal device in the foregoing method embodiment. The chip in the terminal device receives information from another module (for example, a radio frequency module or an antenna) in the terminal device, where the information is sent by a first network device to the terminal device; or the chip in the terminal device sends information to another module (for example, a radio frequency module or an antenna) in the terminal device, where the information is sent by the terminal device to a first network device.

When the communication apparatus is a module used in the first network device, the module in the first network device implements functions of the first network device in the method embodiment. The module in the first network device receives information from another module (for example, a radio frequency module or an antenna) in the first network device, where the information is sent by a terminal device to the first network device; or the module in the first network device sends information to another module (for example, a radio frequency module or an antenna) in the first network device, where the information is sent by the first network device to a terminal device. The module in the first network device herein may be a chip in the first network device, or may be a DU or another module. The DU herein may be a DU in an open radio access network (open radio access network, O-RAN) architecture.

The processor in embodiments of this application may be a central processing unit (Central Processing Unit, CPU), or may be another general-purpose processor, a digital signal processor (Digital Signal Processor, DSP), an application-specific integrated circuit (Application-Specific Integrated Circuit, ASIC), a field programmable gate array (Field Programmable Gate Array, FPGA) or another programmable logic device, a transistor logic device, a hardware component, or any combination thereof. The general-purpose processor may be a microprocessor or any conventional processor.

The method steps in embodiments of this application may be implemented by hardware, or may be implemented by the processor by executing software instructions. The software instructions may include corresponding software modules. The software modules may be stored in a random access memory, a flash memory, a read-only memory, a programmable read-only memory, an erasable programmable read-only memory, an electrically erasable programmable read-only memory, a register, a hard disk, a removable hard disk, a compact disc read-only memory (compact disc read-only memory, CD-ROM), or any other form of storage medium well-known in the art. For example, a storage medium is coupled to the processor, so that the processor can read information from the storage medium or write information into the storage medium. Certainly, the storage medium may alternatively be a component of the processor. The processor and the storage medium may be located in an ASIC. In addition, the ASIC may be located in a first network device or a terminal device. Certainly, the processor and the storage medium may alternatively exist as discrete components in the first network device or the terminal device.

It should be understood that sequence numbers of the foregoing processes do not mean execution sequences in various embodiments of this application. The execution sequences of the processes should be determined based on functions and internal logic of the processes, but should not be construed as any limitation on the implementation processes of embodiments of this application.

A person of ordinary skill in the art may be aware that illustrative logical blocks (illustrative logical block) and steps (step) described with reference to embodiments disclosed in this specification can be implemented by electronic hardware or a combination of computer software and electronic hardware. Whether these functions are performed by hardware or software depends on particular applications and design constraints of the technical solutions. A person skilled in the art may use different methods to implement the described functions for each particular application, but it should not be considered that the implementation goes beyond the scope of this application.

A person skilled in the art may clearly understand that, for the purpose of convenient and brief description, for a detailed working process of the foregoing system, apparatus, and unit, refer to a corresponding process in the foregoing method embodiment. Details are not described herein again.

In several embodiments provided in this application, it should be understood that the disclosed system, apparatus, and method may be implemented in other manners. For example, the described apparatus embodiments are merely examples. For example, division into the units is merely logical function division and may be other division in actual implementation. For example, a plurality of units or components may be combined or integrated into another system, or some features may be ignored or not performed. In addition, the displayed or discussed mutual couplings or direct couplings or communication connections may be implemented by using some interfaces. The indirect couplings or communication connections between the apparatuses or units may be implemented in electronic, mechanical, or other forms.

The units described as separate parts may or may not be physically separate, and parts displayed as units may or may not be physical units, and may be located in one position, or may be distributed on a plurality of network units. Some or all of the units may be selected based on actual requirements to achieve the objectives of the solutions in embodiments.

When the functions are implemented in the form of a software functional unit and sold or used as an independent product, the functions may be stored in a computer-readable storage medium. Based on such an understanding, a part that essentially contributes to the technical solutions of this application or a part of the technical solutions may be implemented in a form of a software product. The computer software product is stored in a storage medium, and includes several instructions for instructing a computer device (which may be a personal computer, a server, a network device, or the like) to perform all or some of the steps of the methods described in embodiments of this application. The storage medium includes any medium that can store program code, for example, a USB flash drive, a removable hard disk, a read-only memory (read-only memory, ROM), a RAM, a magnetic disk, or an optical disc.

It is clear that a person skilled in the art can make various changes and variations to this application without departing from the scope of this application. Therefore, this application is intended to cover these modifications and variations of this application provided that they fall within the protection scope defined by the following claims and equivalent technologies thereof.

## Claims

1. A handover method, performed by a terminal device or a chip used in a terminal device, wherein the method comprises:
receiving conditional handover CHO configuration information from a first network device, wherein the first network device is a network device to which a source cell of the terminal device belongs, and the CHO configuration information is used by the terminal device to access a first target cell when a first condition is met;
determining, in a first time unit, whether the first condition is met, wherein the first time unit is any time unit in a communication gap that exists during switching of the network device to which the source cell belongs; and
when the first condition is met, accessing the first target cell.

2. The method according to claim 1, wherein the first condition comprises one or more of the following:
a time-based execution condition;
a distance-based execution condition; and
a signal-quality-based execution condition.

3. The method according to claim 2, wherein the time-based execution condition comprises a time window.

4. The method according to claim 2, wherein the distance-based execution condition comprises a distance threshold.

5. The method according to claim 2, wherein the signal-quality-based execution condition comprises one or more of an event A3, an event A4, or an event A5.

6. The method according to claim 5, wherein the method further comprises:
determining, based on first signal quality of the source cell, whether the event A3 or the event A5 is met, wherein the first signal quality is signal quality of the source cell before a time at which the first network device stops covering an area in which the terminal device is located or at a time at which the first network device stops covering an area in which the terminal device is located; or
determining, based on second signal quality of the source cell, whether the event A3 or the event A5 is met, wherein the second signal quality is a default value.

7. The method according to any one of claims 1 to 6, wherein the method further comprises:
when the first condition is not met, accessing a second target cell, wherein a dedicated random access resource is configured for the terminal device in the second target cell.

8. The method according to any one of claims 1 to 6, wherein the method further comprises:
receiving physical cell identifier PCI-unchanged switch indication information from the first network device, wherein the PCI-unchanged switch indication information indicates the terminal device to access a second network device when a second condition is met; and
when the first condition is not met and the second condition is met, accessing the second network device.

9. The method according to claim 8, wherein the second condition comprises one or more of the following:
the time at which the first network device stops covering the area in which the terminal device is located;
a time at which PCI-unchanged switch takes effect;
a time at which the second network device performs downlink synchronization with the terminal device; or
a time at which the second network device starts to cover the area in which the terminal device is located.

10. The method according to any one of claims 1 to 9, wherein the method further comprises:
when the communication gap is greater than a first threshold, determining, in the first time unit, whether the first condition is met.

11. A handover method, performed by a first network device or a chip used in a first network device, wherein the method comprises:
sending CHO configuration information to a terminal device, wherein the CHO configuration information is used by the terminal device to access a first target cell when a first condition is met, and the first condition comprises one or more of the following:
a time-based execution condition;
a distance-based execution condition; and
a signal-quality-based execution condition.

12. The method according to claim 11, wherein the time-based execution condition comprises a time window.

13. The method according to claim 11, wherein the distance-based execution condition comprises a distance threshold.

14. The method according to claim 11, wherein the signal-quality-based execution condition comprises one or more of an event A3, an event A4, or an event A5.

15. The method according to claim 14, wherein the method further comprises:
determining, based on first signal quality of a source cell of the terminal device, whether the event A3 or the event A5 is met, wherein the first signal quality is signal quality of the source cell before a time at which the first network device stops covering an area in which the terminal device is located or at a time at which the first network device stops covering an area in which the terminal device is located; or
determining, based on second signal quality of a source cell of the terminal device, whether the event A3 or the event A5 is met, wherein the second signal quality is a default value.

16. A communication apparatus, comprising a module configured to perform the method according to any one of claims 1 to 10 or a module configured to perform the method according to any one of claims 11 to 15.

17. A communication apparatus, comprising a processor and an interface circuit, wherein the interface circuit is configured to receive a signal from a communication apparatus other than the communication apparatus and transmit the signal to the processor, or send a signal from the processor to a communication apparatus other than the communication apparatus, and the processor is configured to implement the method according to any one of claims 1 to 10 or the method according to any one of claims 11 to 15 by using a logic circuit or by executing code instructions.

18. A communication apparatus, comprising:
a memory, configured to store a computer program; and
a processor, configured to invoke the computer program from the memory and run the computer program, to implement the method according to any one of claims 1 to 10, or implement the method according to any one of claims 11 to 15.

19. A chip system, comprising:
a memory, configured to store a computer program; and
a processor, configured to invoke the computer program from the memory and run the computer program, so that a device in which the chip system is installed performs the method according to any one of claims 1 to 10, or performs the method according to any one of claims 11 to 15.

20. A computer program product, comprising a computer program, wherein when the computer program is executed by a communication apparatus, the method according to any one of claims 1 to 15 is implemented.

21. A computer-readable storage medium, wherein the storage medium stores a computer program or instructions, and when the computer program or the instructions are executed by a communication apparatus, the method according to any one of claims 1 to 15 is implemented.

22. A communication system, comprising:
a terminal device, configured to perform the method according to any one of claims 1 to 10; and
a first network device, configured to perform the method according to any one of claims 11 to 15.
